# EUROPÄISCHE PATENTSCHRIFT

(11) **EP 0 475 901 B1**
(45) Veröffentlichungstag und Bekanntmachung des Hinweises auf die Patenterteilung: **26.04.1995**
(21) Anmeldenummer: 91810703.8
(22) Anmeldetag: 03.09.1991
(51) Int. Cl.: B66F 7/02

(54) **Hubsäule**
Lifting post
Elévateur à colonne

(30) Priorität: 07.09.1990 CH 2905/90
(43) Veröffentlichungstag der Anmeldung: 18.03.1992
(73) Patentinhaber: MESH AG, CH-2823 Courcelon (CH)
(72) Erfinder: Hänggi, Roland, CH-2823 Courcelon (CH)
(74) Vertreter: Eschmann, Heinz

(56) Entgegenhaltungen:
- WO-A-90/06279
- DE-A- 2 403 633
- DE-A- 2 417 645
- DE-B- 1 067 997
- FR-A- 935 066
- FR-A- 2 335 446
- FR-A- 2 382 400
- FR-A- 2 446 797
- FR-A- 2 483 385
- GB-A- 2 018 940

## Beschreibung

Die Erfindung betrifft eine Hebevorrichtung gemäss Oberbegriff des unabhängigen Patentanspruchs 1.

Derartige Hebevorrichtungen werden zu vielerlei Zwecken eingesetzt, sei es in der Lagerbewirtschaftung, in Produktions- und Abfüllanlagen, oder allgemein überall dort, wo Lasten maschinell angehoben werden müssen, weil sie schwer sind oder weil sie gezielt, eventuell sogar gesteuert, bewegt werden sollen. Sind dabei Substanzen beteiligt, die sich störend auswirken können, beispielsweise weil sie Staub entwickeln oder chemisch aggressiv sind, so werden an die Funktionstüchtigkeit der Hebevorrichtung besondere Anforderungen gestellt.

Unter den bekannten Konstruktionen derartiger Hebevorrichtungen gibt es Ausführungen, die solch ungünstigen Betriebsumgebungen dadurch Rechnung tragen, dass das Antriebsaggregat im Innern einer Hohlsäule angeordnet ist. Bei all diesen Konstruktionen wird jedoch die eigentliche Laufeinheit trotzdem noch ausserhalb der Hohlsäule geführt, bevorzugt in der Form eines in Gleitführungen laufenden Schlittens. Dabei bleibt der Nachteil bestehen, dass schädigende Substanzen von aussen die Laufeinheit und ihre Führungseinrichtung stören und sogar beschädigen können. Ueberdies hat es sich als schwierig erwiesen, Gleitführungen zu konstruieren, die auch bei hochzuhebenden Lasten von über 7000 N noch einwandfrei laufen.
Ferner ist es beispielsweise aus der deutschen Offenlegungsschrift DE-A-24 03 633 bekannt, bei Hubsäulen, die für Hebevorrichtungen mit mindestens zwei zusammenarbeitenden Säulen vorgesehen sind, wie dies etwa bei Hebebühnen für Kraftfahrzeuge der Fall ist, auch die Laufeinheit im Innern einer Hohlsäule anzuordnen und diese mit Laufrollen zu ihrer Führung auf der Innenwand der Hohlsäule zu versehen. Der Einsatz einer derartigen Hubsäule als Hebevorrichtung in einer Einsäulen-Ausführung entsprechend der vorliegend betroffenen Art wirft jedoch Probleme auf. Während nämlich Kräfte aus seitlichen Richtungen, die bei starker und unausgeglichener Beanspruchung des Lastträgers entstehen, bei zwei oder mehr Säulen jeweils durch eine weitere Säule abgestützt werden können, müssen diese bei einer Einsäulen-Ausführung in der einzelnen Säule aufgenommen werden. Gerade bei Einsäulen-Ausführungen, die insbesondere in Lagerbewirtschaftung und Verfahrenstechnik mit besonders hohen Anforderungen an Förderpräzision und Laufruhe eingesetzt werden, ist es jedoch wichtig, Störungen durch seitlich wirkende Kräfte möglichst zu verhindern.

Aufgabe der Erfindung ist es daher, eine Hebevorrichtung der eingangs beschriebenen Art so auszugestalten, dass auch bei Verwendung einer einzelnen Hubsäule die für den Einsatz in Lagerbewirtschaftung und Verfahrenstechnik notwendige Funktionstüchtigkeit, insbesondere hinsichtlich Bewältigung unausgeglichener Belastung sowie Laufruhe und Förderpräzision, gewährleistet ist.

Dabei soll die Hebevorrichtung aus Gründen der Betriebssicherheit eine möglichst geschlossene und unkomplizierte Aussenfläche aufweisen und damit wenig anfällig für störende Substanzen wie Staub oder Chemikalien und zudem reinigungsfreundlich sein.

Weiter soll die vorgeschlagene Hebevorrichtung für kleinere Lasten mit einer Gewichtskraft von etwa 200 N bis zu grösseren Lasten von etwa 15'000 N geeignet sein und durch eine vergleichsweise einfache Konstruktion kostengünstig hergestellt werden können.

Die Lösung dieser Aufgabe ist im kennzeichnenden Teil des unabhängigen Patentanspruchs 1 definiert, bevorzugte Ausführungsbeispiele ergeben sich aus den abhängigen Patentansprüchen.

Durch die Innenführung der Laufeinheit wird erreicht, dass einzig das Befestigungsorgan für den Lastträger sich teilweise ausserhalb der Hohlsäule befindet, und alle anderen Teile vor störend einwirkenden Substanzen geschützt sind. Die erst durch diese Konstruktionsweise ermöglichte Lagerung und Führung der Laufeinheit mittels Laufrollen lässt gleichzeitig Ausführungen für Lasten bis zu 15'000 N zu. Dabei erlauben die zueinander um 90° versetzt angeordneten Achsenpaare vorteilhaft, die Laufeinheit über das eine Achsenpaar jeweils gegen Kräfte in diejenigen seitlichen Richtungen abzustützen, die durch das andere Achsenpaar nicht wirkungsvoll aufgenommen werden. Und als weiterer Vorteil erweist sich die Möglichkeit, als Hohlsäule handelsübliche und somit konstengünstige Hohlprofilrohre zu verwenden.

Anhand der beiliegenden Zeichnungen wird nachstehend ein Ausführungsbeispiel der erfindungsgemässen Hebevorrichtung nebst einiger Konstruktionsvarianten beschrieben.
Fig. 1 ist eine Seitenansicht der gesamten Hebevorrichtung,
Fig. 2 zeigt den Horizontalschnitt durch die Säule und ein Lagerorgan entlang der Linie I - I von Fig. 1, und
Fig. 3 stellt den Ausschnitt II aus Fig. 1 als Vertikalschnitt und vergrössert dar.

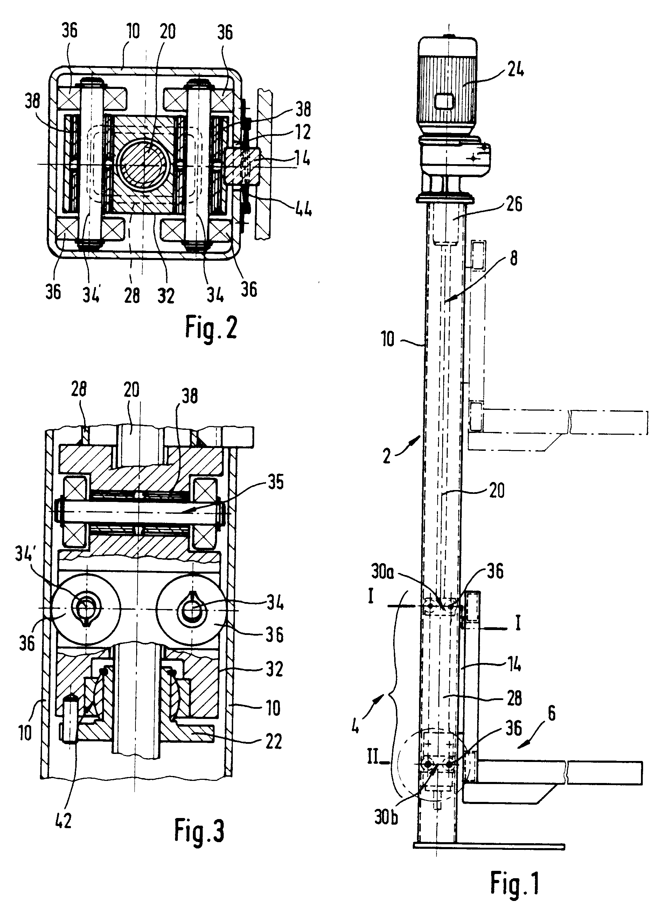

Wie in Figur 1 zu sehen, besteht die Hebevorrichtung aus den Teilen: Hohlsäule 2, Laufeinheit 4, Lastträger 6 und Antriebsaggregat 8. Die Hohlsäule 2 ist ein handelsübliches Vierkant-Hohlprofilrohr 10 aus vorzugsweise rostfreiem Stahl mit einer Längsnut 12, die sich in der Figur 1 auf der rechten Seite des Hohlprofilrohres befindet (vergleiche auch Fig. 2). Im Hohlprofilrohr ist die Laufeinheit 4 nach oben und unten verschiebbar gelagert. Der Lastträger 6 ist mit der Laufeinheit 4 durch eine Befestigungsbrücke 14 verbunden, die durch die Längsnut 12 ragt. Angetrieben wird die Laufeinheit 4, und mit ihr der Lastträger 6, durch einen Spindelantrieb, bestehend aus einer Gewindespindel 20 und einer mit der Laufeinheit 4 verbundenen Muttereinheit 22. Zum Drehen der Gewindespindel 20 ist ein Motor 24 mit ihr über eine Kupplung 26 verbunden. Die Laufeinheit 4 umfasst ein Gestell 28, beispielsweise ein zweites, kleineres Hohlprofil, und zwei Lagerorgane 30a und 30b.

Der Aufbau der Lagerorgane 30a und 30b ist anhand des in Fig. 2 im Horizontalschnitt gezeigten ersten Lagerorgans 30a zu sehen. Ein am Gestell 28 befestigtes Verbindungsstück 32 umfasst zwei Achsen 34 und 34' mit jeweils zwei Laufrollen 36, die auf zwei sich gegenüberliegenden Innenseiten des Vierkant-Hohlprofilrohres 10 laufen. Die Achsen 34 und 34' sind in der hier beschriebenen Ausführungsform in Stahl-Gummi-Elementen 38 (auch unter der Bezeichnung Gummibüchsen bekannt) gelagert. Diese Stahl-Gummi-Elemente 38 dienen dazu, die relativ grossen Fertigungstoleranzen handelsüblicher Hohlprofilrohre auszugleichen.

Das zweite Lagerorgan 30b ist in Fig. 3 im Vertikalschnitt dargestellt. Sein Aufbau entspricht demjenigen des ersten Lagerorgans 30a, weist jedoch in dem hier dargestellten Ausführungsbeispiel zusätzlich die Muttereinheit 22 auf. Die Muttereinheit 22 ist mit dem Lagerorgan durch ein als Ausgleichsvorrichtung dienendes Kugelgelenk 42 verbunden, mit welchem Auslenkungen des Lagerorgans, respektive der Laufeinheit 4 ausgeglichen werden, die beim Beladen, Entladen und Bewegen des Lastträgers 6 auftreten können. Ohne eine derartige Ausgleichsvorrichtung bestünde die Gefahr, dass die Gewindespindel 20 durch seitlich wirkende Kräfte zu stark verbogen würde.

Weiter weist das in Fig. 3 gezeigte Lagerorgan ein zum ersten Achsenpaar 34 und 34' um 90 Grad gedrehtes zweites Achsenpaar 35 auf, welches gleich aufgebaut ist wie das erste. Dieses zweite Achsenpaar 35 wird zusätzlich eingesetzt, um das Lagerorgan gegen Kräfte in diejenigen seitlichen Richtungen abzustützen, die bei starker und unausgeglichener Beanspruchung des Lastträgers 6 entstehen können und durch das erste Achsenpaar 34 und 34' nicht wirkungsvoll aufgenommen werden.

Es sei ausdrücklich erwähnt, dass die beschriebene und in den Zeichnungen dargestellte Art der Hebevorrichtung vom Fachmann in mehrfacher Weise im Rahmen des Erfindungsgedankens abgewandelt werden kann. So ist es zum Beispiel möglich, als Schutzmassnahmen zur weiteren Verbesserung der Funktionstüchtigkeit die Längsnut 12 mit einer flexiblen Schutzabdeckung 44, zum Beispiel einer Nylonbürste, zu versehen (siehe Fig. 2), und zudem alle Teile auf Lebensdauer zu schmieren.

Auch können andere Querschnittformen des Hohlprofilrohres, beispielsweise runde, verwendet sein, und die Muttereinheit des Spindelantriebs lässt sich an beliebiger Stelle der Laufeinheit einsetzen, oder der Spindelantrieb ist gänzlich ersetzt durch ein anderes Antriebsaggregat, beispielsweise durch einen Seilzug.

Weiter geht aus der dargestellten Konstruktion der Hebevorrichtung hervor, dass sie sich eignet für Ausführungen in sehr unterschiedlichen Grössen und für Befestigungen an Boden, Wand oder Decke in jeder denkbaren Neigung. Ebenso ist zu betonen, dass zum Lastträger keine näheren Angaben gemacht sind, weil dieser in vielfältigen dem Fachmann bekannten Ausführungen und zu unterschiedlichsten Zwecken ausgebildet sein kann.

## Patentansprüche

1. Hebevorrichtung bestehend aus einer Hohlsäule (2), einer Laufeinheit (4), einem an der Laufeinheit (4) angebrachten Lastträger (6) und einem sich im Innern der Hohlsäule (2) befindenden Antriebsaggregat (8) zum Heben und Senken der Laufeinheit, wobei die Hohlsäule (2) ein Hohlprofilrohr (10) mit einer sich zumindest teilweise über die Säulenlänge erstreckenden Längsnut (12) ist, die Laufeinheit (4) im Innern dieses Hohlprofilrohrs läuft und mindestens zwei im vertikalen Abstand voneinander angeordnete Lagerorgane (30a, 30b) aufweist, welche je mindestens zwei Achsen (34, 34') mit Laufrollen (36) umfassen und zur Lagerung und Führung der Laufeinheit (4) dienen, und der sich ausserhalb des Hohlprofilrohres (10) befindende Lastträger (6) durch ein durch die Längsnut (12) ragendes Befestigungsorgan (14) an der Laufeinheit (4) befestigt ist, dadurch *gekennzeichnet*, dass wenigstens eines der Lagerorgane (30a, 30b) zwei je zwei parallel zueinander und im wesentlichen auf gleicher Höhe bezüglich der Hauptachse des Hohlprofilrohrs (10) stehende Achsen (34, 34'; 35) umfassende Achsenpaare aufweist, die zueinander um 90° bezüglich der Hauptachse des Hohlprofilrohres (10) versetzt angeordnet sind, wobei die Laufrollen (36) der jeweils einen Achse eines Achsenpaares sich auf einer Hohlprofilwand abstützen, die derjenigen Hohlprofilwand, auf welche sich die Laufrollen der anderen Achse desselben Achsenpaares abstützen, gegenüberliegt.

2. Hebevorrichtung nach Anspruch 1, dadurch *gekennzeichnet*, dass die Achsen (34, 34') der Laufrollen (36) in Stahl-Gummi-Elementen (38) gelagert sind.

3. Hebevorrichtung nach einem der Ansprüche 1 oder 2, dadurch *gekennzeichnet*, dass das Antriebsaggregat (8) zum Heben und Senken der Laufeinheit (4) ein Spindelantrieb mit einer Gewindespindel (20) und einer mit der Laufeinheit (4) verbundenen Muttereinheit (22) ist.

4. Hebevorrichtung nach Anspruch 3, dadurch *gekennzeichnet*, dass die Muttereinheit (22) mit der Laufeinheit (4) durch eine Ausgleichsvorrichtung (42) verbunden ist, welche Auslenkungen des Lagerorgans bezüglich der Achse der Gewindespindel (20) ausgleichen kann.

5. Hebevorrichtung nach Anspruch 4, dadurch *gekennzeichnet*, dass die Ausgleichsvorrichtung (42) ein Kugelgelenk ist.

## Claims

1. Lifting device consisting of a hollow column (2), a running unit (4), a load carrier (6) mounted on the running unit (4), and a drive unit (8) situated in the interior of the hollow column (2) for the purpose of raising and lowering the running unit, the hollow column (2) being a hollow tubular section (10) having a longitudinal slot (12) extending over at least part of the length of the column, while the running unit (4) runs inside said hollow tubular section and has at least two bearing elements (30a, 30b) which are arranged at a vertical distance from one another and each of which comprises at least two axes (34, 34') having running rollers (36) and serves to mount and guide the running unit (4), and the load carrier (6) situated outside the hollow tubular section (10) is fastened to the running unit (4) by a fastening means (14) projecting through the longitudinal slot (12), characterised in that at least one of the bearing elements (30a, 30b) has two pairs of axes each of which comprises two axles (34, 34'; 35) situated parallel to one another and substantially at the same height relative to the main axis of the hollow tubular section (10) and which pairs are offset at 90° to one another relative to the main axis of the hollow tubular section (10), with the running rollers (36) of each single axle of a pair of axles being supported on a side of a hollow section wall lying opposite that side of the hollow section wall on which the running rollers of the other axle of the same pair of axles are supported.

2. Lifting device according to Claim 1, characterised in that the axles (34, 34') of the running rollers (36) are mounted in steel-rubber elements (38).

3. Lifting device according to one of Claims 1 or 2, characterised in that the drive unit (8) for raising and lowering the running unit (4) is a spindle drive having a threaded spindle (20) and a nut unit (22) connected to the running unit (4).

4. Lifting device according to Claim 3, characterised in that the nut unit (22) is connected to the running unit (4) by a compensating device (42) able to compensate for deflections of the bearing element relative to the axis of the threaded spindle (20).

5. Lifting device according to Claim 4, characterised in that the compensating device (42) is a ball-and-socket joint.

## Revendications

1. Dispositif de levage composé d'une colonne creuse (2), d'un ensemble curseur (4), d'un support de charge (6) monté sur l'ensemble curseur (4) et d'un groupe d'entraînement (8), se trouvant à l'intérieur de la colonne creuse (2), pour assurer le levage et l'abaissement de l'ensemble curseur, la colonne creuse (2) étant un tube profilé creux (10), avec une rainure longitudinale (12) s'étendant au moins sur une partie de la longueur de la colonne, l'ensemble curseur (4) se déplaçant à l'intérieur de ce tube profilé creux et présentant au moins deux organes de palier (30a, 30b) disposés à distance l'un de l'autre verticalement, comprenant chacun au moins deux axes (34, 34') avec des galets de roulement (36) et servant de palier et de guidage à l'ensemble curseur (4), et le support de charge (6) se trouvant à l'extérieur du tube profilé creux (10) étant fixé sur l'ensemble curseur (4) au moyen d'un organe de fixation (14) passant par la rainure longitudinale (12), caractérisé en ce qu'au moins l'un des organes-palier (30a, 30b) présente deux paires d'axes comprenant chacune des axes (34, 34'; 35) disposés parallèlement les uns aux autres et placés sensiblement au même niveau, par rapport à l'axe principal du tube profilé creux (10), et ces paires d'axes étant décalées l'une par rapport à l'autre de 90° par rapport à l'axe principal du tube profilé creux (10), les galets de roulement (36) d'un premier axe appartenant à une paire d'axes prenant appui sur la paroi profilée creuse, qui se trouve en face ou en regard de la paroi profilée creuse sur laquelle prennent appui les galets de roulement du deuxième axe de la même paire d'axes.

2. Dispositif de levage selon la revendication 1, caractérisé en ce que les axes (34, 34') des galets de roulement (36) tourillonnent dans des éléments acier-caoutchouc (38).

3. Dispositif de levage selon l'une des revendications 1 ou 2, caractérisé en ce que le groupe d'entraînement (8) destiné au levage et à l'abaissement de l'ensemble curseur (4) est un entraînement à vis avec une broche filetée (20) et un ensemble écrou (22) relié à l'ensemble curseur (4).

4. Dispositif de levage selon la revendication 3, caractérisé en ce que l'ensemble écrou (22) est relié à l'ensemble curseur (4) au moyen d'un dispositif compensateur (42) qui est en mesure de compenser les déviations de l'organe de palier par rapport à l'axe de la broche filetée (20).

5. Dispositif de levage selon la revendication 4, caractérisé en ce que le dispositif compensateur (42) est une articulation sphérique.
